(19) Europäisches Patentamt
European Patent Office
Office européen des brevets

(11) **EP 2 550 227 B1**

(12) **EUROPÄISCHE PATENTSCHRIFT**

(45) Veröffentlichungstag und Bekanntmachung des Hinweises auf die Patenterteilung:
**27.04.2016 Patentblatt 2016/17**

(21) Anmeldenummer: **11709103.3**

(22) Anmeldetag: **14.03.2011**

(51) Int Cl.:
*G01S 17/93* *(2006.01)*      *B66F 17/00* *(2006.01)*
*B66F 9/06* *(2006.01)*

(86) Internationale Anmeldenummer:
**PCT/EP2011/053793**

(87) Internationale Veröffentlichungsnummer:
**WO 2011/117098 (29.09.2011 Gazette 2011/39)**

(54) **VERFAHREN ZUM BETREIBEN EINES AUTONOMEN FLURFÖRDERFAHRZEUGS**

METHOD FOR OPERATING AN AUTONOMOUS INDUSTRIAL TRUCK

PROCÉDÉ POUR FAIRE FONCTIONNER UN CHARIOT DE MANUTENTION AUTONOME

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.03.2010 DE 102010012749**

(43) Veröffentlichungstag der Anmeldung:
**30.01.2013 Patentblatt 2013/05**

(73) Patentinhaber: **KUKA Roboter GmbH**
**86165 Augsburg (DE)**

(72) Erfinder:
• **PFAFF, Patrick**
**86165 Augsburg (DE)**
• **SPRUNK, Christoph**
**79283 Bollschweil (DE)**

(74) Vertreter: **Patentanwälte**
**Funk & Böss GbR**
**Sigmundstraße 1**
**80538 München (DE)**

(56) Entgegenhaltungen:
EP-A1- 0 351 807      DE-A1- 3 730 105
GB-A- 2 157 436       US-A- 3 493 920

• **K.O. ARRAS ET AL: "Real-time obstacle avoidance for polygonal robots with a reduced dynamic window", PROCEEDINGS 2002 IEEE INTERNATIONAL CONFERENCE ON ROBOTICS AND AUTOMATION (CAT. NO.02CH37292), Bd. 3, 1. Januar 2002 (2002-01-01), Seiten 3050-3055, XP55000792, DOI: 10.1109/ROBOT.2002.1013695 ISBN: 978-0-78-037272-6 in der Anmeldung erwähnt**

**Beschreibung**

Die Erfindung betrifft ein Verfahren zum Betreiben eines autonomen Flurförderfahrzeugs.

K.O. Arras et. al. beschreiben in "Real-Time Obstacle Avoidance For Polygonal Robots With A Reduced Dynamic Window", Proceedings of the 2002 IEEE International Conference on Robotics Automation, Washington, DC, Mai 2002, Seiten 3050-3055 ein Verfahren zum Vermeiden eines Zusammenstoßes eines mobilen Roboters mit einem oder mehreren Hindernissen.

Die DE 37 30 105 A1 und die US 3,493,920 offenbaren jeweils ein Verfahren zum Sichern eines im Raum beweglichen Fahrzeugs. Mittels Abstandssensoren des Fahrzeugs werden Abstände zu einem Hindernis ermittelt. Beim Unterschreiten einer ersten, größeren Entfernung zum Hindernis wird die Geschwindigkeit des Fahrzeugs reduziert und beim Unterschreiten einer zweiten, kleineren Entfernung wird ein Notstop ausgelöst.

Aufgabe der Erfindung ist es, ein verbessertes Verfahren zum Betreiben eines autonomen, insbesondere eines holonomen / omnidirektionalen Flurförderfahrzeugs anzugeben.

Die Aufgabe der Erfindung wird gelöst durch ein Verfahren zum Betreiben eines autonomen Flurförderfahrzeugs, aufweisend folgende Verfahrensschritte:

- mittels einer Messvorrichtung eines autonomen Flurförderfahrzeugs Ermitteln, ob aufgrund der aktuellen Bewegung des Flurförderfahrzeugs dieses potenziell mit wenigstens einem Hindernis zusammenstößt,

- Ermitteln derjenigen Stellen des Flurförderfahrzeugs, mit dem das Hindernis potenziell zusammenstößt,

- Ermitteln des jeweiligen bewegungsabhängigen Abstands zwischen dem Hindernis und der Stelle des Flurförderfahrzeugsund

- Berechnen einer Maximalgeschwindigkeit für die aktuelle Bewegung des Flurförderfahrzeugs aufgrund des ermittelten Abstands, sodass aufgrund eines möglichen Bremsens des Flurförderfahrzeugs dieses zuverlässig vor dem Hindernis zum Stehen kommt.

Ein weiterer Aspekt der Erfindung betrifft ein autonomes Flurförderfahrzeug, aufweisend einen Fahrzeugsgrundkörper, am Fahrzeuggrundkörper angeordnete Räder, wenigstens einen Antrieb zum Antreiben wenigstens eines der Räder, eine Messvorrichtung, die eingerichtet ist zu ermitteln, ob aufgrund der aktuellen Bewegung des Flurförderfahrzeugs dieses potenziell mit einem Hindernis zusammenstößt, und eine mit der Messvorrichtung verbundene Steuervorrichtung, die eingerichtet ist, den Antrieb anzusteuern, und die eingerichtet ist, das Flurförderfahrzeug gemäß dem erfindungsgemäßen Verfahren zu betreiben.

Das Flurförderfahrzeug ist insbesondere als ein holonomes / omnidirektionales Flurförderfahrzeug ausgebildet, d.h. als ein Fahrzeug, das sich omnidirektional bewegen kann, also nicht nur längs seiner Orientierung, sondern auch in einem beliebigen Winkel zu seiner Orientierung. Insbesondere ist es mit einem solchen Fahrzeug möglich, eine Drehung um einen beliebig gewählten Momentalpol auszuführen und sich dabei gleichzeitig translatorisch zu bewegen. Im Falle des holonomen Flurtransportfahrzeugs weist dieses insbesondere 3 oder mehr Räder auf, die unabhängig voneinander z.B. mittels eigener, von der Steuervorrichtung angesteuerter Antriebe bewegt werden können. Die Räder können vorzugsweise als omnidirektionale Räder ausgeführt sein.

Gemäß dem erfindungsgemäßen Verfahren wird demnach ermittelt, ob sich ein Hindernis auf der Bewegungsbahn des Flurförderfahrzeugs befindet, also ob beim Beibehalten der aktuellen, z.B. kommandierten Bewegungsrichtung in 3 Freiheitsgraden, Translation und Rotation, ein Zusammenstoß des Flurförderfahrzeugs mit dem Hindernis bevorsteht. Die Messvorrichtung umfasst z.B. Laserscanner.

Aufgrund der von der Messvorrichtung erzeugten Signale wird diejenige Stelle bzw. werden diejenigen Stellen des Flurförderfahrzeugs ermittelt, die mit dem Hindernis bei beibehaltener Bewegungsform kollidieren. Aufgrund dieser Information wird die Maximalgeschwindigkeit in den 3 Freiheitsgraden des Flurförderfahrzeugs derart automatisch eingestellt, dass dieses gegebenenfalls noch rechtzeitig vor dem Hindernis anhalten kann, ohne mit dem Hindernis zusammen zu stoßen, jedoch gleichzeitig die ursprüngliche Bewegungsform (bis auf Geschwindigkeit der Ausführung) beibehalten wird.

Das Ermitteln des Abstands zwischen dem Hindernis und dem Flurförderfahrzeug findet vorzugsweise in fahrzeugeigenen Koordinaten statt. Der Ursprung dieses fahrzeugeigenen Koordinatensystems liegt vorzugsweise im Zentrum bzw. im Mittelpunkt des Flurförderfahrzeugs. Somit kann die Stelle der potenziellen Kollision des Flurförderfahrzeugs mit dem Hindernis in relativ einfacher Weise bestimmt werden.

Für das Ermitteln der Stelle des Fahrzeugs kann ein Modell dessen Kontur verwendet werden. Die Kontur des Flurförderfahrzeugs kann insbesondere mittels Geradenstücken und/oder Kreisbogenstücken modelliert sein, wobei die Stelle auf der modellierten Kontur liegt.

Gegebenenfalls ist es ausreichend, wenn gemäß einer Ausführungsform des erfindungsgemäßen Verfahrens die Kontur des Flurförderfahrzeugs als ein Rechteck approximiert wird.

Die Bewegung des Flurförderfahrzeugs verläuft vorzugsweise auf einer Kreisbahn mit einem nicht festen Momentanpol. D.h. das Flurförderfahrzeug kann eine Kreisbahn um jeden beliebigen Punkt in seiner Bewegungsebene beschreiben. Es ist aber auch möglich, dass die Bewegung entlang einer geraden Linie verläuft, was einem Kreis mit unendlichem Radius entspricht. Für konstante Geschwindigkeiten kann die Bewegung des insbesondere als holonome mobile Plattform ausgebildeten Flurförderfahrzeugs durch eine Rotation um einen beliebigen Punkt in der Ebene und eine zweidimensionale Translation beschrieben werden. Es ist auch möglich, dass für konstante Geschwindigkeiten die Bewegung des insbesondere als holonome Plattform ausgebildeten Flurförderfahrzeugs durch eine Kreisbahn beschrieben werden kann, wobei die Orientierung des Fahrzeuges bezüglich der Bewegungsrichtung beliebig, also nicht notwendigerweise tangential zur ausgeführten Kreisbahn ist.

Für eine Kollisionsvermeidung mit dem Hindernis werden dabei die Geschwindigkeitssollwerte insbesondere in der Nähe von Hindernissen derart verringert, dass Kollisionen vermieden werden können. Der Ursprung des fahrzeugeigenen Koordinatensystems für die nachfolgenden Rechnungen befindet sich vorzugsweise im Mittelpunkt des mobilen Fahrzeugs (Flurförderfahrzeugs).

Nach einer Ausführungsform des erfindungsgemäßen Verfahrens wird die Bewegung des Hindernisses relativ zum Flurförderfahrzeug mittels der Gleichung

$$r_0{}^2 = (x - x_m)^2 + (y - y_m)^2$$

bestimmt, wobei sich das Flurförderfahrzeug auf einer Kreisbahn mit Radius r um den Momentanpol mit den fahrzeugeigenen Koordinaten $(x_m, y_m)$ bewegt, und die Position des Hindernisses mit den fahrzeugeigenen Koordinaten $(x, y)$ beschrieben ist, und $r_0$ der Abstand des Hindernisses zum Momentanpol ist.

Dann ist es möglich, die Koordinaten $(x_c; y_c)$ der Stelle, an der das Hindernis potentiell mit der Fahrzeugkontur kollidiert, gemäß der Gleichung

$$r_0{}^2 = (x_c - x_m)^2 + (y_c - y_m)^2$$

zu ermitteln.

Ist die Kontur des Flurförderfahrzeugs als ein Rechteck mit Geradenstücken modelliert, wie dies gemäß einer Variante des erfindungsgemäßen Verfahrens vorgesehen ist, wobei die Vorderseite des Flurförderfahrzeugs mit einem ersten Geradenstück modelliert ist, die Rückseite des Flurförderfahrzeugs mit einem zweiten Geradenstück, die linke Seite des Flurförderfahrzeugs mit einem dritten Geradenstück modelliert ist und die rechte Seite des Flurförderfahrzeugs mit einem vierten Geradenstück modelliert ist, dann können die Koordinaten der Stelle berechnet werden als:

$$x_c = x_{vor}; \quad y_c = y_m \pm \sqrt{r_0^2 - (x_{vor} - x_m)} \, ,$$

wenn die Stelle dem ersten Geradenstück,

$$x_c = x_{rück}, \quad y_c = y_m \pm \sqrt{r_0^2 - (x_{rück} - x_m)} \, ,$$

wenn die Stelle dem zweiten Geradenstück,

$$x_c = x_{links}, \quad y_c = y_m \pm \sqrt{r_0^2 - (x_{links} - x_m)} \, ,$$

wenn die Stelle dem dritten Geradenstück,

$$x_c = x_{rechts}, \quad y_c = y_m \pm \sqrt{r_0^2 - (x_{rechts} - x_m)} \, ,$$

wenn die Stelle dem vierten Geradenstück zugeordnet ist.

Es ist auch möglich, dass sich das Flurförderfahrzeug in einem Winkel $\alpha$ relativ zu seiner Orientierung längs einer geraden Linie bewegt. Dann ist $\begin{pmatrix} v_x \\ v_y \end{pmatrix} = \begin{pmatrix} \cos\alpha \\ \sin\alpha \end{pmatrix}$ ein Vektor, der die

Bewegungsrichtung innerhalb des fahrzeugeigenen Koordinatensystems repräsentiert, sodass die Trajektorie des Hindernisses durch $\begin{pmatrix} x \\ y \end{pmatrix} = \begin{pmatrix} x_0 \\ y_0 \end{pmatrix} + u \cdot \begin{pmatrix} v_x \\ v_y \end{pmatrix}; u \in R$ bestimmt wird.

Gemäß einer Ausführungsform des erfindungsgemäßen Verfahrens werden die Positionen der potenziellen Stellen gemäß folgender Regel bestimmt:

Ist $v_x > 0$, dann befindet sich die Stelle potenziell auf der Vorderseite des Flurförderfahrzeugs, entsprechend dem ersten Geradenstück,

ist $v_x < 0$, dann befindet sich die Stellepotenziell auf der Rückseite des Flurförderfahrzeugs, entsprechend dem zweiten Geradenstück,

ist $y > 0$, dann befindet sich die Stelle potenziell auf der linken Seite des Flurförderfahrzeugs, entsprechend dem dritten Geradenstück, und

ist $v_y < 0$, dann befindet sich die Stelle potenziell auf der rechten Seite des Flurförderfahrzeugs, entsprechend dem vierten Geradenstück.

Sind die Koordinaten der potenziellen Stelle ermittelt worden, dann kann die Entfernung zwischen der Stelle und dem Hindernis gemäß folgender Regel bestimmt werden:

Liegt die Stelle auf dem ersten Geradenstück, dann ergeben sich für die Stelle die Koordinaten

$$x_c = x_{vor} \text{ und } y_c = y_0 + d \cdot v_y$$

und die Entfernung als:

$$d = \frac{x_{vor} - x_0}{v_x}$$

liegt die Stelle auf dem zweiten Geradenstück, dann ergeben sich für die Stelle die Koordinaten

$$x_c = x_{rück} \text{ und } y_c = y_0 + d \cdot v_y$$

und die Entfernung als:

$$d = \frac{x_{rück} - x_0}{v_x}$$

liegt die Stelle auf dem dritten Geradenstück, dann ergeben sich für die Stelle die Koordinaten

$$y_c = y_{links} \text{ und } x_c = x_0 + d \cdot v_x$$

und die Entfernung als:

$$d = \frac{y_{links} - y_0}{v_y}$$

liegt die Stelle auf dem vierten Geradenstück, dann ergeben sich für die Stelle die Koordinaten

$$y_c = y_{rechts} \quad \text{und} \quad x_c = x_0 + d \cdot v_x$$

und die Entfernung als:

$$d = \frac{y_{rechtss} - y_0}{v_y} \; .$$

Liegt die Kontur einer Fahrzeugkante des Flurförderfahrzeugs in parametrisierter Form relativ zum fahrzeugeigenen Koordinatensystem wie folgt vor:

$$\begin{pmatrix} a \\ b \end{pmatrix} + t \cdot \begin{pmatrix} k_x \\ k_y \end{pmatrix}; t \in \left[ t_{start}, t_{ende} \right]$$

wobei $(k_x, k_y)^T$ der Richtungsvektor der Kante im fahrzeuginternen Koordinatensystem ist und die Parametrisierung für Werte $t \in [t_{start}, t_{ende}]$ die Kante abläuft. Durch einen Schnitt mit dem Kreis, der mittels der Gleichung

$$r_0^2 = (x - x_m)^2 + (y - y_m)^2$$

beschrieben ist, kann dann folgende Lösung für die Bewegung auf der Kreisbahn ermittelt werden

$$r_0^2 = (a + t \cdot k_x - x_m)^2 + (b + t \cdot k_y - y_m)^2$$

Je nach Ausführungsform des erfindungsgemäßen Verfahrens können gegebenenfalls alle Bewegungen erfasst werden, die mit einem holonomen Fahrzeug ausgeführt werden können. Um mögliche Kollisionen verhindern zu können, kann Nachfolgendes vorgesehen sein:

Eine allgemeine Formulierung der Bewegung des Flurförderfahrzeugs auf einer Kreisbahn, die keine Ausrichtung in Richtung der Kreistangente voraussetzt.
Eine Erweiterung des Bewegungsmodells, um gegebenenfalls auch eine Bewegung des Flurförderfahrzeugs entlang einer geraden Linie, so genannte "Straigth Line Bewegungen" mit nicht festgelegter Ausrichtung des Flurförderfahrzeugs zu berücksichtigen.

Es kann auch eine Erweiterung auf polygonale Fahrzeugformen, d.h. Konturen des Flurförderfahrzeugs vorgesehen sein.
Ein hierarchisches Kollisionsmodell für Fahrzeuge, wie z.B. einem omnidirektionalen Fahrzeugs, die sich nicht durch eine einzige polygonale Struktur darstellen lassen. Diese hierarchische Darstellung kann darüber hinaus die Effizienz erhöhen, da in relativ großer Entfernung von Hindernissen lediglich mit einer einfachen polygonalen Kontur gearbeitet wird, die in der Nähe von Hindernissen beliebig verfeinert werden kann.
Überprüfen, welche Bewegungen im Falle einer bereits detektierten Kollision zur Verbesserung des berechneten "Kollisionswertes" führen, um ein Frei-Fahren des Flurförderfahrzeuges zu ermöglichen.
Gegebenfalls Empfang der Laserscannerdaten (allgemein: Daten der Messvorrichtung) und gegebenenfalls von Odometriewerten in sicherer Technik.
Je nach Ausführungsform des erfindungsgemäßen Flurförderfahrzeugs, das insbesondere als autonomer Roboter ausgeführt sein kann, bewegt sich dieses auf einer Kreisbahn oder auf einer geraden Linie.
Zur Vereinfachung kann man das Koordinatensystem in das Zentrum des mobilen Flurförderfahrzeugs legen.

Nun bewegen sich praktisch die Hindernispunkte, die mit dem Laser (allgemein: Messvorrichtung) erkannt werden, auf einer Kreisbahn auf die mobile Plattform (Flurförderfahrzeug) zu.

Nun kann man je nach Ausführungsform man folgendermaßen vorgehen:

1) Berechnung für jeden Laserpunkt, ob er (z.B. gegeben die durch den Benutzer oder ein Navigationssystem kommandierte aktuelle Kreisbahn) mit dem Fahrzeug kollidiert,

2) falls "Ja," Berechnung des Kollisionspunktes,

3) Berechnen der Distanz auf der Kreisbahn vom Hindernis bis zum Punkt der möglichen Kollision,

4) Berechnen der maximalen Geschwindigkeit, die ein Abbremsen noch ermöglicht.

Beim einem rechteckigen Flurförderfahrzeug wird vorzugsweise die Kollision für 4 Geradenstücke berechnet.

Bei einem polygonalen Flurförderfahrzeug wird vorzugsweise diese Berechnung für beliebig viele Geradenstücke durchgeführt, um beispielsweise möglichst genau die Kontur abzubilden.

Ausführungsbeispiele der Erfindung sind exemplarisch in den beigefügten schematischen Figuren dargestellt. Es zeigen:

Fig. 1          eine Draufsicht eines holonomen Flurförderfahrzeugs in schematischer Darstellung und

Figuren 2, 3    Draufsichten der modellierten Kontur des Flurförderfahrzeugs.

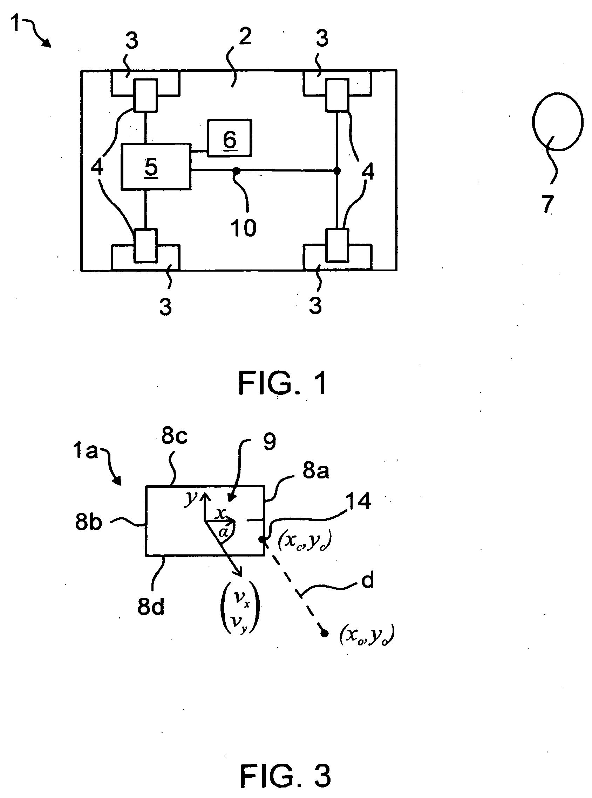

Die Fig. 1 zeigt in einer Draufsicht schematisch ein autonomes Flurförderfahrzeug, das insbesondere als ein holonomes Flurförderfahrzeug 1 ausgebildet ist. Da das Flurförderfahrzeug ein holonomes Flurförderfahrzeug ist, kann es sich in alle Richtungen frei bewegen; es handelt sich demnach bei dem Flurförderfahrzeug 1 um ein omnidirektionales Fahrzeug.

Im Falle des vorliegenden Ausführungsbeispiels weist das Flurförderfahrzeug 1 einen Fahrzeuggrundkörper 2 und mindestens drei omnidirektionale Räder 3 auf, die auch als Mecanum-Räder bezeichnet werden. Solche Räder umfassen beispielsweise eine drehbar gelagerte Felge, an der mehrere Rollkörper antriebslos gelagert sind. Die Felge kann mit einem Antrieb angetrieben werden. Im Falle des vorliegenden Ausführungsbeispiels werden die Räder 3 mit jeweils einem elektrischen Antrieb 4 angetrieben.

Das Flurförderfahrzeug 1 weist ferner eine am Fahrzeuggrundkörper 2 angeordnete Steuervorrichtung 5 auf, die mit den Antrieben 4 verbunden ist. Auf der Steuervorrichtung 5 läuft ein Rechenprogramm, das die Antriebe 4 derart ansteuert, dass diese sich bewegen, damit sich das Flurförderfahrzeug 1 mit einer vorbestimmten Geschwindigkeit und einer vorbestimmten Bewegungsrichtung oder auf einer bestimmten Kreisbahn um einen beliebig festgelegten Momentanpol bewegt.

Das Flurförderfahrzeug 1 umfasst ferner eine mit der Steuervorrichtung 5 verbundene und z.B. am Fahrzeuggrundkörper 2 angeordnete Abstandsmessvorrichtung 6. Die Abstandsmessvorrichtung 6 umfasst z.B. Laserscanner und ist vorgesehen, ein Hindernis 7 zu erkennen, sodass gegebenenfalls die Steuervorrichtung 5 bzw. ein auf der Steuervorrichtung 5 laufendes Rechenprogramm eine Entfernung zum Hindernis 7 berechnen kann und aufgrund der aktuellen Bewegung des Flurförderfahrzeugs 1 einen potenziellen Zusammenstoß des Flurförderfahrzeugs 1 mit dem Hindernis 7 erkennen kann.

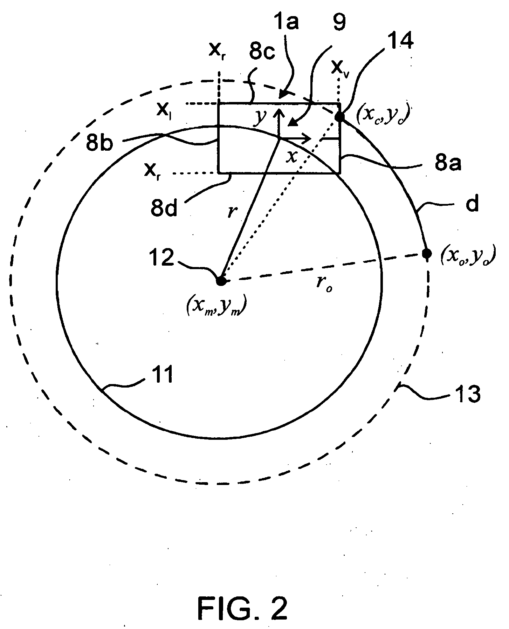

Im Falle des vorliegenden Ausführungsbeispiels ist in der Steuervorrichtung 5 ein in den Figuren 2 und 3 gezeigtes Modell 1a des Flurförderfahrzeugs 1 gespeichert, das insbesondere die Kontur des Flurförderfahrzeugs 1 modelliert. Insbesondere ist die Kontur des Flurförderfahrzeugs 1 durch Geradenstücke und/oder Kreisbodenstücke approximiert. Im Falle des vorliegenden Ausführungsbeispiels ist die Kontur des Flurförderfahrzeugs 1 als ein Rechteck mit vier Geradenstücken 8a-8d beschrieben.

Des Weiteren wird die Entfernung zwischen dem Flurförderfahrzeug 1 und dem Hindernis 7 in fahrzeugeigenen Koordinaten x, y beschrieben, wobei z.B. die x-Achse dieses Koordinatensystems 9 parallel zu den Geradenstücken 8c, 8d und die y-Achse dieses Koordinatensystems 9 parallel zu den Geradenstücken 8a, 8b verläuft. Das entsprechende Koordinatensystem 9 ist beispielsweise in das Zentrum 10 des Flurförderfahrzeug 1 gelegt. Somit kann die Kontur des modellierten Flurförderfahrzeugs 1 ebenfalls in Koordinaten des Koordinatensystems 9 beschrieben werden. Wird z.B. die Seite des Flurförderfahrzeugs 1, welche in Richtung der x-Achse des Koordinatensystems 9 zeigt, als die Vorderseite des Flurförderfahrzeugs 1 angesehen, dann beschreibet das Geradenstück 8a die Vorderseite des Flurförderfahrzeugs 1 mit der x-Koordinate $x_{vor}$, das Geradenstück 8b die Rückseite des Flurförderfahrzeugs 1 mit der x-Koordinate $x_{rück}$, das Geradenstück 8c die linke Seite des Flurförderfahrzeugs 1 mit der y-Koordinate $y_{links}$, und das Geradenstück 8d die rechte Seite des Flurförderfahrzeugs 1 mit der y-Koordinate $y_{rechts}$.

Wird nun angenommen, dass sich das Flurförderfahrzeug 1 auf einer Kreisbahn 11 mit Radius r und dem Momentanpol 12 mit den fahrzeugeigenen Koordinaten $(x_m, y_m)$ bewegt und die Position des Hindernisses 7 die fahrzeugeigenen Koordinaten $(x_0, y_0)$ aufweist, dann ergibt sich für den quadratischen Abstand $r_0^2$ *des* Hindernisses 7 zum Momentanpol 12

$$r_0^2 = (x - x_m)^2 + (y - y_m)^2.$$

Diese Gleichung beschreibt gleichzeitig die Trajektorie 13 des Hindernisses 7 im fahrzeugeigenen Koordinatensystem 9 des Flurförderfahrzeugs 1. Der Momentanpol 12 wird im englischen als "Instantaneous Center of Curvature" bezeichnet.

Den Radius r der Kreisbahn 11 kann die Steuervorrichtung 5 z.B. aufgrund einer Eingabe einer Bedienperson, aufgrund eines Kommandos eines nicht näher dargestellten Navigationssystems oder aufgrund der Ansteuerung der Räder 3 bzw. deren Antriebe 4 ermitteln.

Sollen nun diejenigen Punkte bzw. Stellen 14 berechnet werden, an denen die Kontur des Flurförderfahrzeugs 1 die Trajektorie 13 des Hindernisses 7 schneidet, kann dies folgendermaßen durchgeführt werden:

$$r_0^2 = (x_c - x_m)^2 + (y_c - y_m)^2,$$

wobei $(x_c, y_c)$ die Koordinaten der Stelle im fahrzeugeigenen Koordinatensystem 9 sind.

Im Falle des vorliegenden Ausführungsbeispiels ist das Flurförderfahrzeug 1 mittels des Modells 1a modelliert, also mit rechteckiger Kontur und den Geradenstücken 8a-d. Somit können potenzielle Punkte 14 bzw. Stellen 14 der Kontur, mit die potenziell mit dem Hindernis 7 zusammenstoßen, wie folgt berechnet werden:

Liegt der Punkt bzw. die Stelle 14 auf dem Geradenstück 8a, also vorderseitig, dann ergeben sich für diese Stelle 14 folgende Koordinaten:

$$x_c = x_{vor}$$

$$y_c = y_m \pm \sqrt{r_0^2 - (x_{vor} - x_m)}$$

Liegt der Punkt bzw. die Stelle 14 auf dem Geradenstück 8c, ist also der linken Seite des Flurförderfahrzeug 1 zugeordnet, dann ergeben sich für diese Stelle 14 folgende Koordinaten:

$$x_c = x_{links}$$

$$y_c = y_m \pm \sqrt{r_0^2 - (x_{links} - x_m)}$$

Liegt der Punkt bzw. die Stelle 14 auf dem Geradenstück 8d, ist also der rechten Seite des Flurförderfahrzeug 1 zugeordnet, dann ergeben sich für diese Stelle 14 folgende Koordinaten:

$$x_c = x_{rechts}$$

$$y_c = y_m \pm \sqrt{r_0^2 - (x_{rechts} - x_m)}$$

Liegt der Punkt bzw. die Stelle 14 auf dem Geradenstück 8b, also rückseitig, dann ergeben sich für diese Stelle 14 folgende Koordinaten:

$$x_c = x_{rück}$$

$$y_c = y_m \pm \sqrt{r_0^2 - (x_{rück} - x_m)}$$

Da im Falle des vorliegenden Ausführungsbeispiels der Ursprung des Koordinatensystems 9 im Zentrum 10 des Flurförderfahrzeugs 1 liegt, gilt außerdem:

$$x_{rück} \leq x_c \leq x_{vor}$$

$$y_{rechts} \leq y_c \leq x_{links}$$

Somit kann die Steuervorrichtung 5 für die Punkte bzw. Stellen 14 die Entfernung d zur nächsten Kollision mit dem Hindernis 7 berechnen, indem die Winkeldistanz zwischen der Stelle 14 und dem Hindernis 7 ermittelt wird und diese mit dem Radius r bezüglich des Momentanpols 12 berechnet wird.

Im Falle des vorliegenden Ausführungsbeispiels handelt es sich bei dem Flurförderfahrzeug 1 um ein omnidirektionales Fahrzeug. Somit bewegt sich das Flurförderfahrzeug 1 nicht zwingend in Richtung seiner Orientierung, sondern in einem beliebigen Winkel $\alpha$ relativ dazu. Daher sind auch Bewegungen entlang einer geraden Line möglich, bei der eine Kollision mit dem Hindernis 7 an zwei Stellen 14 möglich sind. Dies ist in der Fig. 3 veranschaulicht.

Sei nun $\begin{pmatrix} v_x \\ v_y \end{pmatrix} = \begin{pmatrix} \cos\alpha \\ \sin\alpha \end{pmatrix}$ ein Vektor, der die Bewegungsrichtung im fahrzeugeigenen Koordinatensystem 1 repräsentiert. Die Trajektorie des Hindernisses 7 ist demnach bestimmt durch:

$$\begin{pmatrix} x \\ y \end{pmatrix} = \begin{pmatrix} x_0 \\ y_0 \end{pmatrix} + u \cdot \begin{pmatrix} v_x \\ v_y \end{pmatrix}; u \in R$$

Durch die folgenden Regeln kann nun die Steuervorrichtung 5 die Suche der Stelle 14 (Kollisionspunkt) mit den Koordinaten $(x_c, y_c)$ auf jeweils zwei Seiten S der Kontur des Flurförderfahrzeugs 1 bezüglich der vorgegebenen Geschwindigkeit eingeschränkt werden:

Ist $v_x > 0$, dann befindet sich die Stelle 14 potenziell auf der Vorderseite des Flurförderfahrzeugs 1, entsprechend dem Geradenstück 8a.

Ist $v_y > 0$, dann befindet sich die Stelle 14 potenziell auf der linken Seite des Flurförderfahrzeugs 1, entsprechend dem Geradenstück 8c.

Ist $v_y < 0$, dann befindet sich die Stelle 14 potenziell auf der rechten Seite des Flurförderfahrzeugs 1, entsprechend dem Geradenstück 8d.

Ist $v_x < 0$, dann befindet sich die Stelle 14 potenziell auf der Rückseite des Flurförderfahrzeugs 1, entsprechend dem Geradenstück 8b.

Die Schnittpunkte der Hindernisstrajektorie mit der Kontur des Flurförderfahrzeugs 1 und die Entfernungen d bis zum Hindernis 7 berechnen sich wie folgt:

Liegt der Punkt bzw. die Stelle 14 auf dem Geradenstück 8a, also vorderseitig, dann ergeben sich für diese Stelle 14 folgende Koordinaten:

$$x_c = x_{vor}$$

$$y_c = y_0 + d \cdot v_y$$

woraus sich die Entfernung d berechnet als:

$$d = \frac{x_{vor} - x_0}{v_x}$$

Liegt der Punkt bzw. die Stelle 14 auf dem Geradenstück 8c, ist also der linken Seite des Flurförderfahrzeug 1 zugeordnet, dann ergeben sich für diese Stelle 14 folgende Koordinaten:

$$y_c = y_{links}$$

$$x_c = x_0 + d \cdot v_x$$

woraus sich die Entfernung d berechnet als:

$$d = \frac{y_{links} - y_0}{v_y}$$

Liegt der Punkt bzw. die Stelle 14 auf dem Geradenstück 8d, ist also der rechten Seite des Flurförderfahrzeug 1 zugeordnet, dann ergeben sich für diese Stelle 14 folgende Koordinaten:

$$y_c = y_{rechts}$$

$$x_c = x_0 + d \cdot v_x$$

woraus sich die Entfernung d berechnet als:

$$d = \frac{y_{rechtss} - y_0}{v_y}$$

Liegt der Punkt bzw. die Stelle 14 auf dem Geradenstück 8b, also rückseitig, dann ergeben sich für diese Stelle 14 folgende Koordinaten:

$$x_c = x_{rück}$$

$$y_c = y_0 + d \cdot v_y$$

woraus sich die Entfernung d berechnet als:

$$d = \frac{x_{r\ddot{u}ck} - x_0}{v_x}$$

Angenommen, die Kontur einer Fahrzeugkante des Flurförderfahrzeug 1 liegt in parametrisierter Form relativ zum fahrzeugeigenen Koordinatensystem 9 wie folgt vor:

$$\begin{pmatrix} a \\ b \end{pmatrix} + t \cdot \begin{pmatrix} k_x \\ k_y \end{pmatrix}; t \in \left[ t_{start}, t_{ende} \right]$$

wobei $(k_x, k_y)^T$ der Richtungsvektor der Kante im fahrzeuginternen Koordinatensystem 9 ist und die Parametrisierung für Werte $t \in [t_{start}, t_{ende}]$ die Kante, abläuft.

Durch einen Schnitt mit einem Kreis, der mittels der Gleichung bereits obenstehend genannten Gleichung beschrieben ist

$$r_0{}^2 = (x - x_m)^2 + (y - y_m)^2$$

ergibt sich folgende Lösung für die Fahrt auf der Kreisbahn:

$$r_0{}^2 = (a + t \cdot k_x - x_m)^2 + (b + t \cdot k_y - y_m)^2$$

Dies kann umformuliert werden als:

$$t^2 + 2\frac{k_x(a - x_m) + k_y(b - y_m)}{k_x^2 + k_y^2} t - \frac{r_0^2}{k_x^2 + k_y^2} = 0$$

Aufgelöst nach t ergibt sich:

$$t_{1;2} = -\frac{k_x(a - x_m) + k_y(b - y_m)}{k_x^2 + k_y^2} \pm \sqrt{\frac{(k_x(a - x_m) + k_y(b - y_m))^2}{(k_x^2 + k_y^2)^2} - \frac{r_0^2}{k_x^2 + k_y^2}}$$

Für eine Bewegung entlang einer geraden Linie kann das Problem durch einen Schnitt zweier Geraden gelöst werden. D.h. man setzt die Hindernistrajektorie gemäß der Gleichung

$$\begin{pmatrix} x \\ y \end{pmatrix} = \begin{pmatrix} x_0 \\ y_0 \end{pmatrix} + u \cdot \begin{pmatrix} v_x \\ v_y \end{pmatrix}; u \in R$$

mit der parametrisierten Darstellung des Flurförderfahrzeugs 1 gemäß Gleichung

$$\begin{pmatrix} a \\ b \end{pmatrix} + t \cdot \begin{pmatrix} k_x \\ k_y \end{pmatrix}; t \in \left[ t_{start}, t_{ende} \right]$$

gleich:

$$\begin{pmatrix} a \\ b \end{pmatrix} + t \cdot \begin{pmatrix} k_x \\ k_y \end{pmatrix} = \begin{pmatrix} x_0 \\ y_0 \end{pmatrix} + u \cdot \begin{pmatrix} v_x \\ v_y \end{pmatrix}$$

Befördert das Flurförderfahrzeug 1 z.B. einen nicht näher dargestellten Roboter und ist die Kontur des Flurförderfahrzeugs mit Roboter durch ein komplexeres Polygon gegeben, so kann folgender hierarchischer Ansatz zur Effizienzsteigerung verwendet werden.

Die Kontur des Roboters wird durch ein umgebendes Rechteck approximiert und die Kollisionsvermeidung, basierend auf diesem Rechteck, wird durchgeführt. Befindet sich das Hindernis 7 innerhalb dieses approximierenden Rechtecks, kann die Kollisionsvermeidung mit einem genaueren, aufwendigeren Polygon gerechnet werden. Dies ermöglicht eine effiziente Berechnung für die Mehrheit der auftretenden Fälle (Hindernisse 7 außerhalb des approximierenden Rechtecks), stellt aber dennoch sicher, dass bei Sicherheitszonenverletzungen ein "Freifahren" des Roboters basierend auf exakten Analysen gestattet werden kann.

Befindet sich das Hindernis 7 innerhalb einer Sicherheitszone um den Roboter, so kann es vorgesehen sein, dass nicht generell alle Bewegungen durch das Kollisionsvermeidungssystem verhindert werden. Vielmehr kann eine Analyse durchgeführt werden, ob die beabsichtigte Bewegung die Verletzung der Sicherheitszone verstärkt oder zu einer Reduzierung der Sicherheitszonenverletzung führt. Im letzteren Fall kann die Bewegung mit eventuell reduzierter Geschwindigkeit vom Kollisionsvermeidungssystem gestattet werden, um dadurch ein "Freifahren" des Roboters zu ermöglichen. Die Entscheidung, ob eine beabsichtigte Bewegung eine Schutzzonenverletzung verstärkt, kann anhand von Vorzeichenbetrachtungen von berechneter Distanz und beabsichtigter Bewegung getroffen werden.

Nachdem die Steuervorrichtung 5 die Entfernung d zwischen der Stelle 14 und dem Hindernis 7 ermittelt hat, stellt sie die Maximalgeschwindigkeit, mit der sich das Flurförderfahrzeug 1 maximal bewegen darf, für die aktuelle Bewegung derart ein, sodass aufgrund eines möglichen Bremsens des Flurförderfahrzeugs 1 dieses zuverlässig vor dem Hindernis 7 zum Stehen kommt.

**Patentansprüche**

1. Verfahren zum Betreiben eines autonomen Flurförderfahrzeugs, aufweisend folgende Verfahrensschritte:

   - mittels einer Messvorrichtung (6) eines autonomen Flurförderfahrzeugs (1) Ermitteln, ob aufgrund der aktuellen Bewegung des Flurförderfahrzeugs (1) dieses potenziell mit wenigstens einem Hindernis (7) zusammenstößt,
   - Ermitteln derjenigen Stellen (14) des Flurförderfahrzeugs (1), mit dem das Hindernis (7) potenziell zusammenstößt,
   - Ermitteln des jeweiligen bewegungsabhängigen Abstands (d) zwischen dem Hindernis (7) und der Stelle (14) des Flurförderfahrzeugs (1) und
   - Berechnen einer Maximalgeschwindigkeit für die aktuelle Bewegung des Flurförderfahrzeugs (1) aufgrund des ermittelten Abstands (d), sodass aufgrund eines möglichen Bremsens des Flurförderfahrzeugs (1) dieses zuverlässig vor dem Hindernis (7) zum Stehen kommt.

2. Verfahren nach Anspruch 1, bei dem das Flurförderfahrzeug als ein holonomes Flurförderfahrzeug (1) und/oder die Messvorrichtung (6) als Laserscanner ausgebildet ist.

3. Verfahren nach Anspruch 1 oder 2, bei dem das Ermitteln des Abstands (d) zwischen dem Hindernis (7) und dem Flurförderfahrzeug (1) in fahrzeugeigenen Koordinaten bestimmt wird und insbesondere der Ursprung des entsprechenden fahrzeugeigenen Koordinatensystems (9) im Zentrum (10) des Flurförderfahrzeugs (1) liegt.

4. Verfahren nach einem der Ansprüche 1 bis 3, bei dem die Kontur des Flurförderfahrzeugs insbesondere mittels Geradenstücken und/oder Kreisbogenstücken modelliert ist und die Stelle auf der modellierten Kontur liegt.

5. Verfahren nach Anspruch 4, bei dem die Kontur des Flurförderfahrzeugs als ein Rechteck approximiert ist.

6. Verfahren nach einem der Ansprüche 1 bis 5, bei dem die Bewegung des Flurförderfahrzeugs (1) auf einer Kreisbahn (11) oder auf einer geraden Linie verläuft.

7. Verfahren nach Anspruch 6, bei dem die Bewegung des Hindernisses (7) relativ zum Flurförderfahrzeug (1) mittels der Gleichung

$$r_0{}^2 \; = \; (x \; - \; x_m)^2 \; + \; (y \; - \; y_m)^2$$

bestimmt wird, wobei sich das Flurförderfahrzeug (1) auf einer Kreisbahn (11) mit Radius (r) und dem Momentanpol (12) mit den fahrzeugeigenen Koordinaten $(x_m, y_m)$ bewegt, und die Position des Hindernisses (7) mit den fahrzeugeigenen Koordinaten $(x_0, y_0)$ beschrieben ist, und $r_0$ der Abstand des Hindernisses (7) zum Momentanpol (12) ist.

8. Verfahren nach Anspruch 7, bei dem die Koordinaten $(x_c; y_c)$ der Stelle (14) gemäß der Gleichung

$$r_0{}^2 \; = \; (x_c \; - \; x_m)^2 \; + \; (y_c \; - \; y_m)^2$$

ermittelt wird.

9. Verfahren nach Anspruch 8, bei dem die Kontur des Flurförderfahrzeugs (1) als ein Rechteck mit Geradenstücken (8a-d) modelliert ist, wobei die Vorderseite des Flurförderfahrzeugs (1) mit einem ersten Geradenstück (8b) modelliert ist, die Rückseite des Flurförderfahrzeugs (1) mit einem zweiten Geradenstück (8b), die linke Seite des Flurförderfahrzeugs (1) mit einem dritte Geradenstück (8c) modelliert ist und die rechte Seite des Flurförderfahrzeugs (1) mit einem vierten Geradenstück (8d) modelliert ist, und die Koordinaten Stelle (14) sich berechnen als:

$$x_c \; = \; x_{vor}; \quad y_c = y_m \pm \sqrt{r_0^2 - (x_{vor} - x_m)} \; ,$$

wenn die Stelle (14) dem ersten Geradenstück (8a),

$$x_c \; = \; x_{rück}, \quad y_c = y_m \pm \sqrt{r_0^2 - (x_{rück} - x_m)} \; ,$$

wenn die Stelle (14) dem zweiten Geradenstück (8b),

$$x_c \; = \; x_{links}, \quad y_c = y_m \pm \sqrt{r_0^2 - (x_{links} - x_m)} \; ,$$

wenn die Stelle (14) dem dritten Geradenstück (8c),

$$x_c \; = \; x_{rechts}, \quad y_c = y_m \pm \sqrt{r_0^2 - (x_{rechts} - x_m)} \; ,$$

wenn die Stelle (14) dem vierten Geradenstück (8d) zugeordnet ist.

10. Verfahren nach einem der Ansprüche 1 bis 9, bei dem sich das Flurförderfahrzeug (1) in einem Winkel ($\alpha$) relativ zu seiner Orientierung längs einer geraden Linie bewegt, $\begin{pmatrix} v_x \\ v_y \end{pmatrix} = \begin{pmatrix} \cos\alpha \\ \sin\alpha \end{pmatrix}$ ein Vektor ist, der die Bewegungsrichtung innerhalb des fahrzeugeigenen Koordinatensystems (9) repräsentiert, sodass die Trajektorie des Hindernisses (7) durch $\begin{pmatrix} x \\ y \end{pmatrix} = \begin{pmatrix} x_0 \\ y_0 \end{pmatrix} + u \cdot \begin{pmatrix} v_x \\ v_y \end{pmatrix}$; $u \in R$ bestimmt ist.

11. Verfahren nach Anspruch 4 und 10, bei dem Positionen der potenziellen Stellen (14) gemäß folgender Regel bestimmt werden:

Ist $v_x > 0$, dann befindet sich die Stelle (14) potenziell auf der Vorderseite des Flurförderfahrzeugs (1), entsprechend dem ersten Geradenstück (8a),

ist $v_x < 0$, dann befindet sich die Stelle (14) potenziell auf der Rückseite des Flurförderfahrzeugs (1), entsprechend dem zweiten Geradenstück (8b),

ist $v_y > 0$, dann befindet sich die Stelle (14) potenziell auf der linken Seite des Flurförderfahrzeugs (1), entsprechend dem dritten Geradenstück (8c), und

ist $v_y < 0$, dann befindet sich die Stelle (14) potenziell auf der rechten Seite des Flurförderfahrzeugs (1), entsprechend dem vierten Geradenstück (8d).

**12.** Verfahren nach Anspruch 11, bei dem die Entfernung (d) zwischen der Stelle (14) und dem Hindernis (7) gemäß folgender Regel bestimmt wird:

Liegt die Stelle 14 auf dem ersten Geradenstück (8a), dann ergeben sich für die Stelle (14) die Koordinaten

$$x_c = x_{vor} \text{ und } y_c = y_0 + d \cdot v_y$$

und die Entfernung(d) als:

$$d = \frac{x_{vor} - x_0}{v_x}$$

liegt die Stelle (14) auf dem zweiten Geradenstück (8b), dann ergeben sich für die Stelle (14) die Koordinaten

$$x_c = x_{rück} \text{ und } y_c = y_0 + d \cdot v_y$$

und die Entfernung (d) als:

$$d = \frac{x_{rück} - x_0}{v_x}$$

liegt die Stelle (14) auf dem dritten Geradenstück (8c), dann ergeben sich für die Stelle (14) die Koordinaten

$$y_c = y_{links} \text{ und } x_c = x_0 + d \cdot v_x$$

und die Entfernung (d) als:

$$d = \frac{y_{links} - y_0}{v_y}$$

liegt die Stelle (14) auf dem vierten Geradenstück (8d), dann ergeben sich für die Stelle (14) die Koordinaten

$$y_c = y_{rechts} \text{ und } x_c = x_0 + d \cdot v_x$$

und die Entfernung (d) als:

$$d = \frac{y_{rechtss} - y_0}{v_y} .$$

**13.** Verfahren nach Anspruch 7, bei dem die Kontur einer Fahrzeugkante des Flurförderfahrzeugs (1) in parametrisierter Form relativ zum fahrzeugeigenen Koordinatensystem (9) wie folgt vorliegt:

$$\begin{pmatrix} a \\ b \end{pmatrix} + t \cdot \begin{pmatrix} k_x \\ k_y \end{pmatrix}; t \in \left[ t_{start}, t_{ende} \right]$$

wobei $(k_x, k_y)^T$ der Richtungsvektor der Kante im fahrzeuginternen Koordinatensystem (9) ist und die Parametrisierung für Werte $t \in [t_{start}, t_{ende}]$ die Kante abläuft und durch einen Schnitt mit dem Kreis, der mittels der Gleichung

$$r_0{}^2 = (x - x_m)^2 + (y - y_m)^2$$

beschrieben ist, sich folgende Lösung für die Bewegung auf der Kreisbahn ergibt:

$$r_0{}^2 = (a + t \cdot k_x - x_m)^2 + (b + t \cdot k_y - y_m)^2$$

14. Autonomes Flurförderfahrzeug, aufweisend einen Fahrzeugsgrundkörper (2), am Fahrzeuggrundkörper (2) angeordnete Räder (3), wenigstens einen Antrieb (4) zum Antreiben wenigstens eines der Räder (3), eine Messvorrichtung (6), die eingerichtet ist zu ermitteln, ob aufgrund der aktuellen Bewegung des Flurförderfahrzeugs (1) dieses potenziell mit einem Hindernis (7) zusammenstößt, und eine mit der Messvorrichtung (6) verbundene Steuervorrichtung (6), die eingerichtet ist, den Antrieb (4) anzusteuern und die eingerichtet ist, das Flurförderfahrzeug (1) gemäß dem Verfahren nach einem der Ansprüche 1 bis 13 zu betreiben

## Claims

1. Method for operating an automated guided vehicle, comprising the following method steps:

   - by means of a measuring device (6) of an automated guided vehicle (1) determining whether the current movement of the automated guided vehicle (1) would cause the latter to potentially collide with at least one obstacle (7),
   - determining the points (14) on the automated guided vehicle (1) that will potentially collide with the obstacle (7),
   - determining the respective movement-dependent distance (d) between the obstacle (7) and the point (14) of the automated guided vehicle (1) and
   - calculating a maximum velocity for the current movement of the automated guided vehicle (1) on the basis of the determined distance (d), so that as a result of the possible braking of the automated guided vehicle (1) the latter reliably comes to a stop in front of the obstacle (7).

2. Method according to claim 1, in which the automated guided vehicle is designed as a holonomic automated guided vehicle (1) and/or the measurement device (6) is designed as a laser scanner.

3. Method according to either claim 1 or 2, in which the distance (d) between the obstacle (7) and the automated guided vehicle (1) is determined by the vehicle's coordinates, and in particular the origin of the corresponding vehicle's coordinate system (9) is positioned at the centre (10) of the automated guided vehicle (1).

4. Method according to any one of claims 1 to 3, in which the contour of the automated guided vehicle is modelled in particular by means of straight pieces and/or arc-shaped pieces and the point lies on the modelled contour.

5. Method according to claim 4, in which the contour of the automated guided vehicle is approximated as a rectangle.

6. Method according to any one of claims 1 to 5, in which the movement of the automated guided vehicle (1) runs on a circular path (11) or on a straight line.

7. Method according to claim 6, in which the movement of the obstacle (7) relative to the automated guided vehicle (1) is determined by means of the equation

$$r_0{}^2 = (x - x_m)^2 + (y - y_m)^2$$

wherein the automated guided vehicle (1) moves on a circular path (11) with a radius (r) and the instantaneous centre of rotation (12) with the vehicle's coordinates $(x_m, y_m)$, and the position of the obstacle (7) is described by the vehicle's coordinates $(x_0, y_0)$, and $r_0$ is the distance of the obstacle (7) from the instantaneous centre of rotation (12).

**8.** Method according to claim 7, in which the coordinates $(x_c, y_c)$ of the point (14) are determined according to the equation

$$r_0{}^2 = (x_c - x_m)^2 + (y_c - y_m)^2 .$$

**9.** Method according to claim 8, in which the contour of the automated guided vehicle (1) is modelled as a rectangle with straight pieces (8a-d), wherein the front side of the automated guided vehicle (1) is modelled with a first straight piece (8b), the back side of the automated guided vehicle (1) is modelled with a second straight piece (8b), the left side of the automated guided vehicle (1) is modelled with a third straight piece (8c), and the right side of the automated guided vehicle (1) is modelled with a fourth straight piece (8d) and the coordinates of points (14) are calculated as:

$$x_c = x_{vor}; \quad y_c = y_m \pm \sqrt{r_0^2 - (x_{vor} - x_m)}\,,$$

if the point (14) is assigned to the first straight piece (8a),

$$x_c = x_{rück}, \quad y_c = y_m \pm \sqrt{r_0^2 - (x_{rück} - x_m)}\,,$$

if the point (14) is assigned to the second straight piece (8b),

$$x_c = x_{links}, \quad y_c = y_m \pm \sqrt{r_0^2 - (x_{links} - x_m)}\,,$$

if the point (14) is assigned to the third straight piece (8c),

$$x_c = x_{rechts}, \quad y_c = y_m \pm \sqrt{r_0^2 - (x_{rechts} - x_m)}\,,$$

if the point (14) is assigned to the fourth straight piece (8d).

**10.** Method according to any one of claims 1 to 9, in which the automated guided vehicle (1) moves at an angle ($\alpha$) relative to its orientation along a straight line, $\begin{pmatrix} v_x \\ v_y \end{pmatrix} = \begin{pmatrix} \cos\alpha \\ \sin\alpha \end{pmatrix}$ is a vector, that represents the direction of movement within the vehicle's coordinate system (9), so that the trajectory of the obstacle (7) is determined by

$$\begin{pmatrix} x \\ y \end{pmatrix} = \begin{pmatrix} x_0 \\ y_0 \end{pmatrix} + u \cdot \begin{pmatrix} v_x \\ v_y \end{pmatrix}; u \in R .$$

**11.** Method according to claim 4 and 10, in which positions of the potential points (14) are determined according to the following rules:

if $v_x > 0$, then the point (14) is potentially located on the front side of the automated guided vehicle (1) corresponding to the first straight piece (8a),
if $v_x < 0$, then the point (14) is potentially located on the back side of the automated guided vehicle (1) corresponding to the second straight piece (8b),
if $v_y > 0$, then the point (14) is potentially located on the left side of the automated guided vehicle (1) corresponding to the third straight piece (8c), and

if $v_y < 0$, then the point (14) is potentially located on the right side of the automated guided vehicle (1) corresponding to the fourth straight piece (8d).

**12.** Method according to claim 11, in which the distance (d) between the point (14) and the obstacle (7) is determined according to the following rules:

if the point 14 lies on the first straight piece (8a), then the resulting coordinates for the point (14) are

$$x_c = x_{vor} \text{ and } y_c = y_0 + d \cdot v_y$$

and the distance (d) as:

$$d = \frac{x_{vor} - x_0}{v_x}$$

if the point (14) lies on the second straight piece (8b), then the resulting coordinates for the point (14) are

$$x_c = x_{rück} \text{ and } y_c = y_0 + d \cdot v_y$$

and the distance (d) as:

$$d = \frac{x_{rück} - x_0}{v_x}$$

if the point (14) lies on the third straight piece (8c), then the resulting coordinates for the point (14) are

$$y_c = y_{links} \text{ and } x_c = x_0 + d \cdot v_x$$

and the distance (d) as:

$$d = \frac{y_{links} - y_0}{v_y}$$

if the point (14) lies on the fourth straight piece (8d), then the resulting coordinates for the point (14) are

$$y_c = y_{rechts} \text{ and } x_c = x_0 + d \cdot v_x$$

and the distance (d) as:

$$d = \frac{y_{rechtss} - y_0}{v_y} .$$

**13.** Method according to claim 7, in which the contour of a vehicle edge of the automated guided vehicle (1) in its parameterized form relative to the vehicle's coordinate system (9) appears as follows:

$$\begin{pmatrix} a \\ b \end{pmatrix} + t \cdot \begin{pmatrix} k_x \\ k_y \end{pmatrix}; t \in \left[ t_{start}, t_{ende} \right]$$

wherein $(k_x, k_y)^T$ is the direction vector of the edge in the vehicle's coordinate system (9) and the parameterization for values $t \in [t_{start}, t_{ende}]$ runs along the edge and through a cut with the circle, which is described by means of the equation

$$r_0{}^2 = (x - x_m)^2 + (y - y_m)^2$$

then the following solution results for the movement on the circular path:

$$r_0{}^2 = (a + t \cdot k_x - x_m)^2 + (b + t \cdot k_y - y_m)^2$$

14. Autonomous guided vehicle comprising a vehicle basic body (2), wheels (3) arranged on the vehicle basic body (2), at least one drive (4) for driving at least one of the wheels (3), a measuring device (6) that is set up to determine whether on the basis of the current movement of the automated guided vehicle (1) the latter will potentially collide with an obstacle (7), and a control device (6) connected to the measuring device (6) that is set up to control the drive (4) and is set up to operate the automated guided vehicle (1) according to the method according to any one of claims 1 to 13.

## Revendications

1. Procédé pour faire fonctionner un chariot de manutention autonome, présentant les étapes de procédé suivantes :

   - déterminer au moyen d'un dispositif de mesure (6) d'un chariot de manutention autonome (1) si, sur la base du mouvement actuel du chariot de manutention (1), celui-ci entre en collision avec au moins un obstacle (7),
   - déterminer les emplacements (14) du chariot de manutention (1) avec lesquels l'obstacle (7) entre potentiellement en collision,
   - déterminer la distance (d) respective dépendant du mouvement entre l'obstacle (7) et l'emplacement (14) du chariot de manutention (1) et
   - calculer une vitesse maximum pour le mouvement actuel du chariot de manutention (1) sur la base de la distance (d) déterminée, de telle sorte qu'en raison d'un freinage possible du chariot de manutention (1), celui-ci vient s'arrêter devant l'obstacle (7).

2. Procédé selon la revendication 1, dans lequel le chariot de manutention (1) est un chariot de manutention holonome et/ou le dispositif de mesure (6) est réalisé sous forme de scanner au laser.

3. Procédé selon la revendication 1 ou 2, dans lequel la détermination de la distance (d) entre l'obstacle (7) et le chariot de manutention (1) est identifiée dans des coordonnées propre au chariot et en particulier l'origine du système de coordonnées propre au chariot (9) correspondant est situé au centre (10) du chariot de manutention (1).

4. Procédé selon l'une des revendications 1 à 3, dans lequel le contour du chariot de manutention est modelé en particulier au moyen de sections de droites et/ou de sections d'arcs de cercles, et l'emplacement est situé sur le contour modelé.

5. Procédé selon la revendication 4, dans lequel le contour du chariot de manutention est approximé en tant que rectangle.

6. Procédé selon l'une des revendications 1 à 5, dans lequel le mouvement du chariot de manutention (1) se déroule sur un orbite (11) ou sur une ligne droite.

7. Procédé selon la revendication 6, dans lequel le mouvement de l'obstacle (7) par rapport au chariot de manutention (1) est déterminé au moyen de l'équation

$$r_0{}^2 = (x - x_m)^2 + (y - y_m)^2$$

le chariot de manutention (1) se déplaçant sur un orbite (11) avec rayon (r) et le centre instantané de rotation (12) avec les coordonnées propres au chariot $(x_m, y_m)$, la position de l'obstacle (7) étant décrite avec les coordonnées propres au chariot $(x_0, y_0)$, et $r_0$ étant la distance de l'obstacle (7) par rapport au centre instantané de rotation (12).

8. Procédé selon la revendication 7, dans lequel les coordonnées $(x_c, y_c)$ de l'emplacement (14) sont déterminées selon l'équation

$$r_0{}^2 = (x_c - x_m)^2 + (y_c - y_m)^2.$$

9. Procédé selon la revendication 8, dans lequel le contour du chariot de manutention (1) est modelé sous la forme d'un rectangle avec des sections de droite (8a-d), la face avant du chariot de manutention (1) étant modelée avec un première section de droite, la face arrière du chariot de manutention (1) étant modelée avec une deuxième section de droite (8b), la face gauche du chariot de manutention (1) étant modelée avec une troisième section de droite (8c) et la face droite du chariot de manutention (1) étant modelée avec une quatrième section de droite (8d), et les coordonnées de l'emplacement (14) se calculent comme suit :

$$x_c = x_{avant}; \quad y_c = y_m \pm \sqrt{r_0^2 - (x_{av} - x_m)} \ ,$$

si l'emplacement (14) est associé à la première section de droite (8a),

$$x_c = x_{arrière}, \quad y_c = y_m \pm \sqrt{r_0^2 - (x_{ar} - x_m)} \ ,$$

si l'emplacement (14) est associé à la deuxième section de droite (8b),

$$x_c = x_{gauche}, \quad y_c = y_m \pm \sqrt{r_0^2 - (x_{gauche} - x_m)} \ ,$$

si l'emplacement (14) est associé à la troisième section de droite (8c),

$$x_c = x_{droite}, \quad y_c = y_m \pm \sqrt{r_0^2 - (x_{droite} - x_m)} \ ,$$

si l'emplacement (14) est associé à la quatrième section de droite (8d).

10. Procédé selon l'une des revendications 1 à 9, dans lequel le chariot de manutention (1) se déplace le long d'une ligne droite sous un angle ($\alpha$) par rapport à son orientation, $\begin{pmatrix} v_x \\ v_y \end{pmatrix} = \begin{pmatrix} \cos \alpha \\ \sin \alpha \end{pmatrix}$ est un vecteur qui représente la direction de mouvement à l'intérieur du système de coordonnées (9) propre au chariot, de telle sorte que la trajectoire de l'obstacle (7) est déterminée par $\begin{pmatrix} x \\ y \end{pmatrix} = \begin{pmatrix} x_0 \\ y_0 \end{pmatrix} + u \cdot \begin{pmatrix} v_x \\ v_y \end{pmatrix}; u \in R.$

11. Procédé selon les revendications 4 et 10, dans lequel des positions des emplacements (14) potentiels sont déterminées selon la règle suivante :

Si $v_x > 0$, l'emplacement (14) se trouve alors potentiellement sur la face avant du chariot de manutention (1), conformément à la première section de droite (8a),

si $v_x < 0$, l'emplacement (14) se trouve alors potentiellement sur la face arrière du chariot de manutention (1), conformément à la deuxième section de droite (8b),
si $v_y > 0$, l'emplacement (14) se trouve alors potentiellement sur la face gauche du chariot de manutention (1), conformément à la troisième section de droite (8c), et
si $v_y < 0$, l'emplacement (14) se trouve alors potentiellement sur la face droite du chariot de manutention (1), conformément à la quatrième section de droite (8d).

12. Procédé selon la revendication 11, dans lequel la distance (d) entre l'emplacement (14) et l'obstacle (7) est déterminée selon la règle suivante :

Si l'emplacement 14 se trouve sur la première section de droite (8a), il en découle pour l'emplacement (14) les coordonnées

$$x_c = x_{avant} \ et \ y_c = y_0 + d \cdot v_y$$

et la distance (d) comme étant :

$$d = \frac{x_{avant} - x_0}{v_x}$$

si l'emplacement (14) se trouve sur la deuxième section de droite (8b), il en découle pour l'emplacement (14) les coordonnées

$$x_c = x_{arrière} \ et \ y_c = y_0 + d \cdot v_y$$

et la distance (d) comme étant :

$$d = \frac{x_{arrière} - x_0}{v_x}$$

si l'emplacement (14) se trouve sur la troisième section de droite (8c), il en découle pour l'emplacement (14) les coordonnées

$$y_c = y_{gauche} \ et \ x_c = x_0 + d \cdot v_x$$

et la distance (d) comme étant :

$$d = \frac{y_{gauche} - y_0}{v_y}$$

si l'emplacement (14) se trouve sur la quatrième section de droite (8d), il en découle pour l'emplacement (14) les coordonnées

$$y_c = y_{droite} \ et \ x_c = x_0 + d \cdot v_x$$

et la distance (d) comme étant :

$$d = \frac{y_{droite} - y_0}{v_y} \ .$$

**13.** Procédé selon la revendication 7, dans lequel le contour d'un bord de chariot(1) est en présence sous forme paramétrée suivante par rapport au système de coordonnées (9) propre au chariot :

$$\begin{pmatrix} a \\ b \end{pmatrix} + t \cdot \begin{pmatrix} k_x \\ k_y \end{pmatrix}; t \in \left[ t_{départ}, t_{fin} \right]$$

$(k_x, k_y)^T$ étant le vecteur de direction du bord dans le système de coordonnées (9) propre au chariot, et le paramétrage pour des valeurs $t \in Lt_{départ}, t_{fin\lrcorner}$ passant sur le bord, et par une coupe avec le cercle qui est décrit au moyen de l'équation

$$r_0{}^2 = (x - x_m)^2 + (y - y_m)^2,$$

on obtient la solution suivante pour le mouvement sur cet orbite :

$$r_0{}^2 = (a + t \cdot k_x - x_m)^2 + (b + t \cdot k_y - y_m)^2$$

**14.** Chariot de manutention autonome, présentant un corps de base de chariot (2), des roues (3) agencées sur le corps de base du chariot (2), au moins un entraînement (4) pour entraîner au moins l'une des roues (3), un dispositif de mesure (6), qui est conçu pour déterminer si, sur la base du mouvement actuel du chariot de manutention (1), celui-ci entre potentiellement en collision avec un obstacle (7), et un dispositif de commande (6) relié au dispositif de mesure (6), qui est conçu pour piloter l'entraînement (4) et qui est conçu pour faire fonctionner le chariot de manutention (1) selon l'une des revendications 1 à 13.

1

3                 2              3

6

5

4                               4

10

7

## FIG. 1

1a        8c          9        8a

8b                              14

y

x

α                    $(x_c, y_c)$

8d

$\begin{pmatrix} v_x \\ v_y \end{pmatrix}$        d

$(x_o, y_o)$

## FIG. 3

FIG. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3730105 A1

- US 3493920 A

**In der Beschreibung aufgeführte Nicht-Patentliteratur**

- **K.O. ARRAS.** Real-Time Obstacle Avoidance For Polygonal Robots With A Reduced Dynamic Window. *Proceedings of the 2002 IEEE International Conference on Robotics Automation,* Mai 2002, 3050-3055